# EUROPEAN PATENT SPECIFICATION

(11) **EP 3 836 605 B1**
(45) Date of publication and mention of the grant of the patent: **11.11.2026**
(21) Application number: 19845995.0
(22) Date of filing: 26.07.2019
(51) Int. Cl.: H04W 24/10, H04W 36/00, H04W 76/28, H04W 48/12

(54) **MEASUREMENT GAP CONFIGURATION METHOD AND NETWORK NODE**
MESSSPALTKONFIGURATIONSVERFAHREN UND NETZWERKKNOTEN
PROCÉDÉ DE CONFIGURATION D'INTERVALLE DE MESURE ET NOEUD DE RÉSEAU

(30) Priority: 07.08.2018 CN 201810893418
(43) Date of publication of application: 16.06.2021
(60) Divisional application: 26207113.7 / 4 839 006
(73) Proprietor: VIVO MOBILE COMMUNICATION CO., LTD., Dongguan, Guangdong 523860 (CN)
(72) Inventor: CHEN, Li, Dongguan, Guangdong 523860 (CN)
(74) Representative: Lavoix
(86) International application number: PCT/CN2019/097866
(87) International publication number: WO 2020/029811

(56) References cited:
- EP-A1- 3 709 699
- WO-A1-2016/182527
- CN-A- 105 191 391
- CN-A- 106 105 302
- ZTE CORPORATION ET AL: "Discussion on the configuration of measurement gap", vol. RAN WG2, no. Reno, USA; 20171127 - 20171201, 16 November 2017 (2017-11-16), XP051371180, Retrieved from the Internet <URL:http://www.3gpp.org/ftp/tsg%5Fran/WG2%5FRL2/TSGR2%5F100/Docs/> [retrieved on 20171116]
- ZTE CORPORATION: "Summary of Offline discussion #43 [Gap Type decision]", vol. RAN WG2, no. Busan, Korea; 20180521 - 20180525, 25 May 2018 (2018-05-25), XP051520455, Retrieved from the Internet <URL:http://www.3gpp.org/ftp/tsg%5Fran/WG2%5FRL2/TSGR2%5F102/Docs/R2%2D1809128%2Ezip> [retrieved on 20180525]
- NOKIA: "Clarification for measurement gap type", 3GPP TSG-RAN WG2 MEETING #102 R2-1808577, 25 May 2018 (2018-05-25), XP051444834
- HUAWEI: "Measurement gap coordination", 3GPP TSG-RAN WG2 NR AD HOC R2-1706734, 29 June 2017 (2017-06-29), XP051301233
- "Measurement and gap configuration framework in NGEN-DC", 3GPP TSG-RAN WG2 MEETING #AH1807 R2-1809635, 6 July 2018 (2018-07-06), XP051466905

## Description

### TECHNICAL FIELD

This disclosure relates to the field of communications technologies, and in particular, to a method for configuring a measurement gap, and a network node.

### BACKGROUND

After 5G systems are introduced, a dual connectivity (Dual Connectivity, DC) architecture is used to improve transmission reliability. In phase-1 deployment, a dual connectivity architecture is used with long term evolution (Long Term Evolution, LTE) to satisfy an interworking (interworking) requirement. In an LTE DC architecture, measurement gaps (measurement gap) are configured in a per-UE manner. In other words, one measurement gap is configured for each user equipment (User Equipment, UE) by a master base station (master eNB, MeNB).

In a 5G new radio (New Radio, NR) or LTE-NR dual connectivity (LTE-NR Dual Connectivity, EN-DC) architecture, a secondary base station (Secondary eNB, SeNB) may have more capabilities, including a capability to configure per-FR measurement gaps based on frequency ranges (Frequency Range, FR), which requires coordination between the SeNB and a MeNB.

In the related art, after a per-UE gap is configured by the MeNB, the SeNB needs to be notified, but the MeNB is not notified after an FR2 gap is configured by the SeNB. In addition, the mechanism in the related art does not determine how to coordinate on a network side if the MeNB needs to configure a per-UE gap when an FR2 gap has been configured by the SeNB; or how to coordinate on the network side if the SeNB needs to configure an FR2 gap when a per-UE gap has been configured by the MeNB. The mechanism in the related art may cause unnecessary interruption of data transmission by configuring the UE with both per-UE and per-FR gaps, and is not flexible in configuring measurement gaps.

ZTE CORPORATION ET AL: "Discussion on the configuration of measurement gap", 3GPP DRAFT; R2-1712602 DISCUSSION ON THE CONFIGURATION OF MEASUREMENT GAP, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDE vol. RAN WG2, no. Reno, USA; 20171127 - 20171201 16 November 2017 (2017-11-16)) relates to the configuration of measurement gap in RAN2.

### SUMMARY

A technical problem to be resolved in this disclosure is to provide a method for configuring a measurement gap, and a network node, enabling coordination between a master base station (master node, MN) and a secondary base station (secondary node, SN) to configure a per-UE gap and a per-FR gap for UE. The invention is set out in the appended set of claims.

The embodiments of this disclosure have the following beneficial effects:

In the foregoing solutions, after configuring the first measurement gap for the user equipment, the second network node determines, with the first network node, the measurement gap for the user equipment, where the measurement gap for the user equipment is selected from the first measurement gap and the second measurement gap configured by the first network node for the user equipment. The first network node and the second network node may be selected from an MN and an SN, thereby enabling coordination between the MN and the SN to configure per-UE gap and per-FR gaps for the UE.

### BRIEF DESCRIPTION OF DRAWINGS

FIG. 1 is a schematic diagram 1 of a connection between an MN and an SN;
FIG. 2 is a schematic diagram 2 of a connection between an MN and an SN;
FIG. 3 is a flowchart of a method for configuring a measurement gap according to an embodiment of this disclosure;
FIG. 4 is a schematic structural diagram of a second network node according to an embodiment of this disclosure; and
FIG. 5 is a schematic diagram of composition of a network node according to an embodiment of this disclosure.

### DESCRIPTION OF EMBODIMENTS

The present invention is defined by the attached independent claims. Advantageous embodiments are described in the attached dependent claims. Embodiments and/or examples mentioned in the description that do not fall under the scope of the claims are useful for understanding the present invention. To make the to-be-resolved technical problems, technical solutions, and advantages of the embodiments of this disclosure clearer, the following provides detailed descriptions with reference to the accompanying drawings and specific embodiments.

According to the protocol TS 36.300, measurement is categorized into intra-frequency measurement (Intra-frequency measurement) and inter-frequency measurement (inter-frequency measurement). Intra-frequency measurement means that a cell where UE is currently located and a to-be-measured target cell are on a same carrier frequency (central frequency). Inter-frequency measurement means that a cell where UE is currently located and a to-be-measured target cell are not on a same carrier frequency. When UE needs to perform an inter-frequency measurement (including inter-RAT measurement), as a simple way, two types of radio frequency receivers are installed in the UE, to measure a frequency of a current cell and a frequency of the target cell, respectively. However, this leads to increased costs and interference between different frequencies. Therefore, measurement gap has been proposed by the 3rd generation partnership project (3rd Generation Partnership Project, 3GPP). To be specific, during normal transmission and reception of data, some time (that is, the time of a measurement gap) is reserved, and within this period of time, the UE does not transmit or receive any data. A receiver is tuned to a frequency of a target cell for inter-frequency (or inter-RAT) measurement. At the end of the measurement gap time, the receiver is tuned back to a frequency of a current serving cell to resume the transmission and reception of data.

In a scenario in which cell where the UE is currently located has a carrier frequency different from the target cell and a bandwidth of the target cell is smaller than, and located within, a bandwidth of the current cell, the inter-frequency measurement needs to be performed and the measurement gap needs to be configured.

In a scenario in which the cell where the UE is currently located has a carrier frequency different from the target cell, the bandwidth of the target cell is greater than the bandwidth of the current cell and the bandwidth of the current cell is located within the bandwidth of the target cell, the intra-frequency measurement needs to be performed and the measurement gap needs to be configured.

In a scenario in which the cell where the UE is currently located has a carrier frequency different from the target cell, and the bandwidth of the target cell does not overlap the bandwidth of the current cell, the inter-frequency measurement needs to be performed and the measurement gap needs to be configured.

A measurement gap has been introduced in inter-frequency/inter-RAT measurement of LTE. The measurement gap mainly refers to a time of interruption caused by a requirement for retuning (retune) from one radio frequency (Radio Frequency, RF) to another RF for measuring a corresponding reference signal in a measurement process.

A pattern (pattern) of the measurement gap is fixed in LTE. A start location of a measurement gap (including information about an SFN, and a subframe where it locates) is configured by a network side by using a parameter measGapConfig. Details are as follows:

### Gap pattern

| Measurement gap pattern ID (Gap pattern Id) | Measurement gap length (Measurement gap length, MGL) (ms) | Measurement gap repetition period (Measurement gap repetition period, MGRP) (ms) | Minimum available time for inter-frequency and inter-RAT measurements during 480 ms period (Minimum available time for inter-frequency and inter-RAT measurements during 480 ms period) (ms) | Measurement purpose (Measurement purpose) |
|---|---|---|---|---|
| 0 | 6 | 40 | 60 | Inter-Frequency E-UTRAN FDD and TDD, UTRAN FDD, GERAN, LCR TDD, HRPD, CDMA2000 1x |
| 1 | 6 | 80 | 30 | Inter-Frequency E-UTRAN FDD and TDD, UTRAN FDD, GERAN, LCR TDD, HRPD, CDMA2000 1x |

After receiving information about a gap offset, according to the following formulas:
SFN mod T = FLOOR(gapOffset/10);
subframe = gapOffset mod 10;
with T = MGRP/10 as defined in TS 36.133 [16];
the terminal calculates the start location of the measurement gap.

Here, T refers to the measurement gap repetition period, SFN (system frame number) refers to a current system frame number, and subframe refers to a subframe number. As can be learnt from the above, the time length of the gap is fixed at 6 ms, and there are only two options for the repetition period. This is not suitable for a flexible configuration of reference signals in an NR system, such as a channel state information reference signal (CSI Reference Signal, CSI-RS).

In LTE, for all carriers or carrier combinations supported by a terminal, a needforgap indicator is given about whether a measurement gap is needed on each supported frequency band relative to other supported frequency bands for inter-RAT or inter-frequency measurement.

In a 5G NR system, a maximum system bandwidth of 400 MHz is supported, much higher than a maximum system bandwidth of 20 MHz in LTE, to support higher system and user throughput. However, supporting such a high system bandwidth is a huge challenge for implementation of UE, and is not conducive to implementation of low-cost UE. Therefore, the 5G NR system further supports dynamic and flexible bandwidth allocation. A system bandwidth is divided into a plurality of bandwidth parts (bandwidth part, BWP) to support access of narrowband terminal users or energy-saving-mode terminal users.

The 5G NR system supports an operating frequency band above 6 GHz, and may provide higher throughput for data transmission. Because a wavelength of a high frequency signal is short, in comparison with a low frequency band, more antenna array elements may be arranged on a panel of a same size, and a plurality of beams with higher directivity and narrower lobes are formed by using a beamforming technology. The 5G NR system uses a beam scanning technology to send a broadcast signal or system information to a terminal user in a cell.

After 5G systems are introduced, a dual connectivity (Dual Connectivity, DC) architecture is used to improve transmission reliability. In phase-1 deployment, a dual connectivity architecture is used with long term evolution (Long Term Evolution, LTE) to satisfy an interworking (interworking) requirement. In an LTE DC architecture, measurement gaps (measurement gap) are configured in a per-UE manner. In other words, one measurement gap is configured for each user equipment (User Equipment, UE) by a master base station (master eNB, MeNB).

In a 5G new radio (New Radio, NR) or LTE-NR dual connectivity (LTE-NR Dual Connection, EN-DC) architecture, a secondary base station (secondary eNB, SeNB) may have more capabilities, including a capability to configure per-FR measurement gaps based on frequency ranges (Frequency Range, FR), which requires coordination between the SeNB and a MeNB.

In order to enable UE to determine when to perform inter-frequency measurement or when to receive and send data, the UE and the network must have a consistent understanding on measurement gap configurations (for example, start location of a measurement gap, a length of the measurement gap, and a quantity of measurement gaps). These parameters are defined through a MeasGapConfig information element in a radio resource control (Radio Resource Control, RRC) configuration message.

The above measurement gaps are all configured in a per-UE manner. In other words, each UE is configured with an individual measurement gap. In later evolution of LTE, per-CC measurement gaps have been proposed, with one measurement gap configured for each component carrier (component carrier). For the dual connectivity, each cell (cell) in a master cell group (Master Cell Group, MCG) and a secondary cell group (Secondary Cell Group, SCG) served by a MeNB and a SeNB has a different component carrier. The per-CC measurement gap just means that each cell is separately configured with a measurement gap.

In 5G NR, per-cell group measurement gaps (per-cell group, Per-CG) may be employed. To be specific, the MCG and the SCG may each configure one measurement gap for one UE, and this measurement gap is used by all cells (component carrier) belonging to the MCG (or SCG).

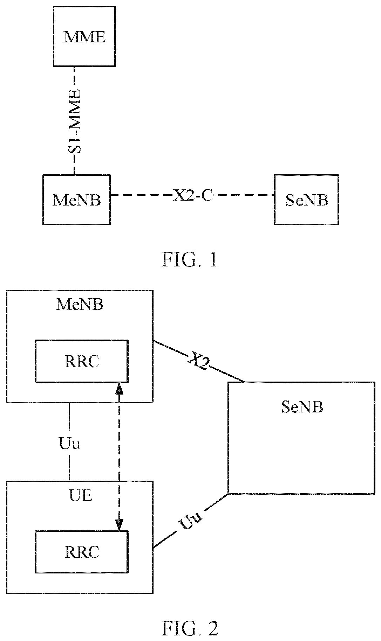

In the discussion about a non-standalone scenario of interworking between 5G NR and LTE, as shown in FIG. 1, in the first phase, an LTE base station is mainly used as a MeNB, and an NR base station gNB is used as an SeNB. However, a discussion on using an NR base station as the master base station while using an LTE base station as the secondary base station is also to continue in the future, as shown in FIG. 2.

In the related art, after a per-UE gap is configured by the MeNB, the SeNB needs to be notified, but the MeNB is not notified after an FR2 gap is configured by the SeNB. In addition, a mechanism in the related art does not determine how to coordinate on a network side if the MeNB needs to configure a per-UE gap when an FR2 gap has been configured by the SeNB; or how to coordinate on the network side if the SeNB needs to configure an FR2 gap when a per-UE gap has been configured by the MeNB. The mechanism in the related art may cause unnecessary interruption of data transmission by configuring the UE with both per-UE and per-FR gaps, and is not flexible in configuring measurement gaps.

To resolve the foregoing problem, the embodiments of this disclosure provide a method for configuring a measurement gap, and a network node, enabling coordination between an MN and an SN to configure a per-UE gap and a per-FR gap for UE.

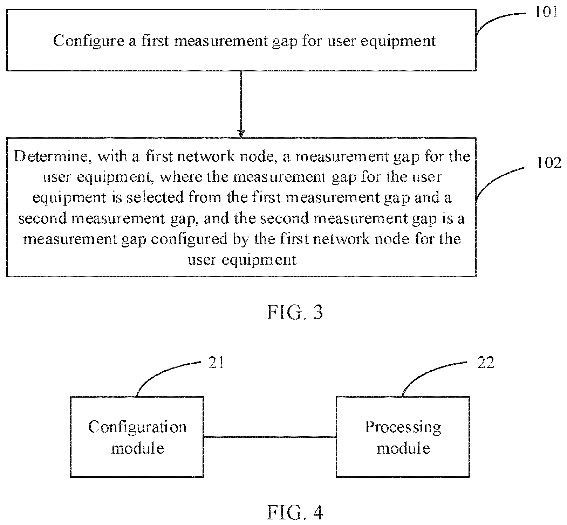

An embodiment of this disclosure provides a method for configuring a measurement gap, applied to a second network node. As shown in FIG. 3, the method includes:
Step 101: Configure a first measurement gap for user equipment.
Step 102: Determine, with a first network node, a measurement gap for the user equipment, where the measurement gap for the user equipment is selected from the first measurement gap and a second measurement gap, and the second measurement gap is a measurement gap configured by the first network node for the user equipment.

In this embodiment, after configuring the first measurement gap for the user equipment, the second network node determines, with the first network node, the measurement gap for the user equipment, where the measurement gap for the user equipment is selected from the first measurement gap and the second measurement gap configured by the first network node for the user equipment. The first network node and the second network node may be selected from an MN and an SN, thereby enabling coordination between the MN and the SN to configure a per-UE gap and a per-FR gap for the UE.

Further, the measurement gap includes at least one of the following: a per-user equipment measurement gap and a per-frequency range measurement gap.

Further, the determining, with the first network node, a measurement gap for the user equipment includes:
sending a first notification message to the first network node, where the first notification message includes at least one of the following information:
that the first measurement gap is to be configured for the user equipment;
configuration information of the first measurement gap;
notification to the first network node to release a per-user equipment measurement gap and/or a per-frequency range measurement gap; and
notification to the first network node to release the configured measurement gap.

Optionally, the method further includes:
releasing, by the first network node, the second measurement gap.

Optionally, the method further includes:
receiving a second notification message from the first network node, where the second notification message includes at least one of the following information:
an acknowledgment message of the first notification message received;
that the second network node is to configure the first measurement gap for the user equipment;
the configuration information of the first measurement gap;
that the per-user equipment measurement gap and/or the per-frequency range measurement gap is to be released; and
that the measurement gap configured by the first network node is to be released.

Optionally, the method further includes:
sending configuration information of the first measurement gap to the user equipment.

Specifically, the configuration information may be sent to the user equipment through a signaling radio bearer (signaling radio bearer, SRB) 3.

Optionally, the method further includes:
receiving a third notification message from the first network node, where the third notification message includes at least one of the following information:
an acknowledgment message of the first notification message received;
that the second network node is to release the second measurement gap configured by the first network node;
the second measurement gap configured by the first network node for the user equipment;
whether the first network node has configured the second measurement gap for the user equipment; and
that the per-user equipment measurement gap and/or the per-frequency range measurement gap is to be released.

Further, when the third notification message includes information that the second measurement gap is to be released, or information that the per-user equipment measurement gap and/or the per-frequency range measurement gap is to be released, the third notification message is an RRC message contained in a transparent container.

Optionally, the method further includes:
releasing the measurement gap for the user equipment.

Specifically, the measurement gap released by the second network node is the second measurement gap.

Further, the releasing the measurement gap for the user equipment includes:
sending, by the second network node, a measurement gap release message to the user equipment; or
sending, by the first network node through the second network node, a measurement gap release message contained in a transparent container to the user equipment.

Optionally, the method further includes:
sending a fourth notification message to the first network node, where the fourth notification message includes at least one of the following information:
an acknowledgment message of the third notification message received;
that the second network node is to configure the first measurement gap for the user equipment;
configuration information of the first measurement gap;
that the measurement gap configured by the first network node is to be released; and
that the per-user equipment measurement gap and/or the per-frequency range measurement gap is to be released.

Optionally, the method further includes:
sending the configuration information of the first measurement gap to the user equipment.

Further, the configuration information and the measurement gap release message are located in a same radio resource control RRC message; or
the configuration information is sent to the user equipment through an SRB1 message.

Optionally, the method further includes:
releasing, by the first network node, the per-user equipment measurement gap and/or the per-frequency range measurement gap.

Optionally, the method further includes:
receiving a fifth notification message from the first network node, where the fifth notification message includes at least one of the following information:
an acknowledgment message of the first notification message received;
that the second network node is to configure the first measurement gap for the user equipment;
the configuration information of the first measurement gap;
that the measurement gap configured by the first network node is to be released;
that the per-user equipment measurement gap and/or the per-frequency range measurement gap is to be released; and
that the first measurement gap is to be configured for the user equipment.

Further, the determining, with the first network node, a measurement gap for the user equipment includes:
receiving a sixth notification message from the first network node, where the sixth notification message includes at least one of the following information:
that the first measurement gap is to be configured for the user equipment;
configuration information of the first measurement gap;
that a per-user equipment measurement gap and/or a per-frequency range measurement gap is to be released; and
that the measurement gap configured by the second network node is to be released.

Optionally, the method further includes:
releasing the per-user equipment measurement gap and/or the per-frequency range measurement gap for the user equipment.

Optionally, the method further includes:
sending a seventh notification message to the first network node, where the seventh notification message includes at least one of the following information:
an acknowledgment message of the sixth notification message received;
that the first network node is to configure the first measurement gap for the user equipment;
the configuration information of the first measurement gap;
that the measurement gap configured by the first network node is to be released;
that the per-user equipment measurement gap and/or the per-frequency range measurement gap is to be released; and
that the first measurement gap is to be configured for the user equipment.

Further, the configuration information includes a pattern, a repetition period, and a length of the measurement gap.

In this embodiment, the second network node may be a master base station, and the first network node may be a secondary base station; or the second network node is a secondary base station, and the first network node is a master base station.

The method for configuring a measurement gap according to this disclosure is further described below with reference to specific embodiments.

### Embodiment 1

In this embodiment, a first network node configures per-FR gaps for UE, including a measurement gap for an FR1 and a measurement gap for an FR2, or configures a per-UE gap for the UE; and a second network node configures a per-UE gap or per-FR gaps for the UE, including a measurement gap for the FR1 and a measurement gap for the FR2. In this embodiment, the measurement gap is configured for the UE in the following steps.

Step 1: The second network node notifies the first network node, where content of the notification includes at least one of the following:
that a per-UE gap or a per-FR gap is to be configured for the UE;
per-UE gap configuration or per-FR gap configuration;
that a per-FR gap (FR1 gap and/or FR2 gap) or a per-UE gap is to be released; and
that a gap configured by the first network node is to be released.

Step 2: The first network node releases the per-FR gap and/or the per-UE gap for the user equipment.

Step 3: The first network node notifies the second network node, where content of the notification includes at least one of the following:
an acknowledgment message of the notification content received;
that the second network node is to configure the per-UE gap or the per-FR gap for the UE;
the per-UE gap configuration or the per-FR gap configuration;
that the gap configured by the first network node is to be released; and
that the per-FR gap or the per-UE gap is to be released.

Step 4: The second network node configures for the UE the per-UE gap or the per-FR gap.

Further, the configuration information of the per-UE gap or the per-FR gap is sent to the user equipment through an SRB3 message.

Step 4 is a required step, and steps 1-3 are optional. The sequence numbers of the steps cannot be used to limit the sequential order of the steps. It is apparent to a person of ordinary skill in the art that without creative efforts, changes to the sequential order of the steps also fall within the protection scope of this disclosure.

Specifically, the second network node may be an MN, and the first network node may be an SN.

### Embodiment 2

In this embodiment, a first network node configures per-FR gaps for UE, including a measurement gap for an FR1 and a measurement gap for an FR2, or configures a per-UE gap for the UE; and a second network node configures a per-UE gap or per-FR gaps for the UE, including a measurement gap for the FR1 and a measurement gap for the FR2. In this embodiment, the measurement gap is configured for the UE in the following steps.

Step 1: The second network node notifies the first network node, where content of the notification includes at least one of the following:
that a per-UE gap or a per-FR gap is to be configured for the UE;
configuration information of the per-UE gap or configuration information of the per-FR gap, where the configuration information includes a pattern, a repetition period, and a length of the measurement gap, and the like;
that a per-FR gap (FR1 gap and/or FR2 gap) or a per-UE gap is to be released; and
that a gap configured by the first network node is to be released.

Step 2: The first network node notifies the second network node, where content of the notification includes at least one of the following:
an acknowledgment message of the notification content received;
that the second network node is to release the per-FR gap or the per-UE gap configured by the first network node;
the per-UE gap or the per-FR gap configured by the first network node for the UE;
whether the first network node has configured the per-FR gap or the per-UE gap for the UE; and
that the per-FR gap or the per-UE gap is to be released.

Further, information that the per-FR gap or the per-UE gap is to be released is included in an RRC message in a container and transparently transmitted to the second network node.

Step 3: The second network node releases the per-FR gap or the per-UE gap for the user equipment.

Further, the per-FR gap or the per-UE gap released in this step is configured by the first network node for the user equipment.

Further, the releasing the measurement gap for the user equipment includes:
sending, by the second network node, a measurement gap release (gap release) message to the user equipment; or
sending, by the first network node through the second network node, a measurement gap release message contained in a transparent container to the user equipment.

Step 4: The second network node notifies the first network node, where content of the notification includes at least one of the following:
an acknowledgment message of the notification content received;
that the second network node is to configure the per-UE gap or the per-FR gap for the UE;
the configuration information of the per-UE gap or the configuration information of the per-FR gap;
that the gap configured by the first network node is to be released; and
that the per-FR gap or the per-UE gap is to be released.

Step 5: The second network node configures for the UE the per-UE gap or the per-FR gap.

Further, this configuration message may be included in the same RRC message as the gap release message in step 3. Alternatively, this configuration message may be sent to the UE through an SRB1 message.

Step 5 is a required step, and steps 1-4 are optional. The sequence numbers of the steps cannot be used to limit the sequential order of the steps. It is apparent to a person of ordinary skill in the art that without creative efforts, changes to the sequential order of the steps also fall within the protection scope of this disclosure.

Specifically, the second network node may be an MN, and the first network node may be an SN.

### Embodiment 3

In this embodiment, a first network node configures per-FR gaps for UE, including a measurement gap for an FR1 and a measurement gap for an FR2, or configures a per-UE gap for the UE; and a second network node configures a per-UE gap or per-FR gaps for the UE, including a measurement gap for the FR1 and a measurement gap for the FR2. In this embodiment, the measurement gap is configured for the UE in the following steps.

Step 1: The second network node notifies the first network node, where content of the notification includes at least one of the following:
that a per-UE gap or a per-FR gap is to be configured for the UE;
configuration information of the per-UE gap or configuration information of the per-FR gap;
that a per-FR gap (FR1 gap and/or FR2 gap) or a per-UE gap is to be released; and
that a gap configured by the first network node is to be released.

Step 2: The first network node releases the per-FR gap or the per-UE gap for the user equipment.

Step 3: The second network node configures for the UE the per-UE gap or the per-FR gap.

Further, this configuration information is sent to the user equipment through an SRB3 message.

Step 4: The first network node notifies the second network node, where content of the notification includes at least one of the following:
an acknowledgment message of the notification content received;
the per-UE gap or the per-FR gap configured by the second network node for the UE;
the configuration information of the per-UE gap or the configuration information of the per-FR gap;
that the gap configured by the first network node is to be released;
that the per-FR gap or the per-UE gap is to be released; and
that the per-UE gap or the per-FR gap has been configured for the UE.

Step 3 is a required step, and steps 1, 2, and 4 are optional. The sequence numbers of the steps cannot be used to limit the sequential order of the steps. It is apparent to a person of ordinary skill in the art that without creative efforts, changes to the sequential order of the steps also fall within the protection scope of this disclosure.

Specifically, the second network node may be an MN, and the first network node may be an SN.

### Embodiment 4

In this embodiment, a first network node configures a per-UE gap for UE, or configures per-FR gaps for the UE, including a measurement gap for an FR1 and a measurement gap for an FR2; and a second network node configures a per-UE gap or per-FR gaps for the UE. In this embodiment, the measurement gap is configured for the UE in the following steps.

Step 1: The second network node notifies the first network node, where content of the notification includes at least one of the following:
that a per-UE gap or a per-FR gap is to be configured for the UE;
configuration information of the per-UE gap or configuration information of the per-FR gap;
that a per-FR gap (FR1 gap and/or FR2 gap) or a per-UE gap is to be released; and
that a gap configured by the first network node is to be released.

Step 2: The first network node releases the per-FR gap or the per-UE gap for the user equipment.

Step 3: The first network node configures for the UE the per-UE gap or the per-FR gap.

Further, this configuration information is sent to the user equipment through an SRB3 message.

Step 4: The first network node notifies the second network node, where content of the notification includes at least one of the following:
an acknowledgment message of the notification content received;
the per-UE gap or the per-FR gap configured by the second network node for the UE;
the configuration information of the per-UE gap or the configuration information of the per-FR gap;
that the gap configured by the first network node is to be released;
that the per-FR gap or the per-UE gap is to be released; and
that the per-UE gap or the per-FR gap has been configured for the UE.

Step 3 is a required step, and steps 1, 2, and 4 are optional. The sequence numbers of the steps cannot be used to limit the sequential order of the steps. It is apparent to a person of ordinary skill in the art that without creative efforts, changes to the sequential order of the steps also fall within the protection scope of this disclosure.

Specifically, the second network node may be an SN, and the first network node may be an MN.

An embodiment of this disclosure further provides a second network node. As shown in FIG. 4, the second network node includes:
a configuration module 21, configured to configure a first measurement gap for user equipment; and
a processing module 22, configured to determine, with a first network node, a measurement gap for the user equipment, where the measurement gap for the user equipment is selected from the first measurement gap and a second measurement gap, and the second measurement gap is a measurement gap configured by the first network node for the user equipment.

In this embodiment, after configuring the first measurement gap for the user equipment, the second network node determines, with the first network node, the measurement gap for the user equipment, where the measurement gap for the user equipment is selected from the first measurement gap and the second measurement gap configured by the first network node for the user equipment. The first network node and the second network node may be selected from an MN and an SN, thereby enabling coordination between the MN and the SN to configure a per-UE gap and a per-FR gap for the UE.

Further, the measurement gap includes at least one of the following: a per-user equipment measurement gap and a per-frequency range measurement gap.

Further, the processing module is further configured to send a first notification message to the first network node, where the first notification message includes at least one of the following information:
that the first measurement gap is to be configured for the user equipment;
configuration information of the first measurement gap;
notification to the first network node to release a per-user equipment measurement gap and/or a per-frequency range measurement gap; and
notification to the first network node to release the configured measurement gap.

Optionally, the processing module is further configured to receive a second notification message from the first network node, where the second notification message includes at least one of the following information:
an acknowledgment message of the first notification message received;
that the second network node is to configure the first measurement gap for the user equipment;
the configuration information of the first measurement gap;
that the per-user equipment measurement gap and/or the per-frequency range measurement gap is to be released; and
that the measurement gap configured by the first network node is to be released.

Optionally, the processing module is further configured to send configuration information of the first measurement gap to the user equipment.

Further, the configuration information is sent to the user equipment through an SRB3.

Optionally, the processing module is further configured to receive a third notification message from the first network node, where the third notification message includes at least one of the following information:
an acknowledgment message of the first notification message received;
that the second network node is to release the second measurement gap configured by the first network node;
the second measurement gap configured by the first network node for the user equipment;
whether the first network node has configured the second measurement gap for the user equipment; and
that the per-user equipment measurement gap and/or the per-frequency range measurement gap is to be released.

Further, when the third notification message includes information that the second measurement gap is to be released, or information that the per-user equipment measurement gap and/or the per-frequency range measurement gap is to be released, the third notification message is an RRC message contained in a transparent container.

Optionally, the processing module is further configured to release the measurement gap for the user equipment.

Further, the measurement gap released by the second network node is the second measurement gap.

Further, the processing module is specifically configured to send a measurement gap release message to the user equipment.

Optionally, the processing module is further configured to send a fourth notification message to the first network node, where the fourth notification message includes at least one of the following information:
an acknowledgment message of the third notification message received;
that the second network node is to configure the first measurement gap for the user equipment;
the configuration information of the first measurement gap;
that the measurement gap configured by the first network node is to be released; and
that the per-user equipment measurement gap and/or the per-frequency range measurement gap is to be released.

Optionally, the processing module is further configured to send the configuration information of the first measurement gap to the user equipment.

Further, the configuration information and the measurement gap release message are located in a same radio resource control RRC message; or
the configuration information is sent to the user equipment through an SRB 1 message.

Optionally, the processing module is further configured to receive a fifth notification message from the first network node, where the fifth notification message includes at least one of the following information:
an acknowledgment message of the first notification message received;
that the second network node is to configure the first measurement gap for the user equipment;
the configuration information of the first measurement gap;
that the measurement gap configured by the first network node is to be released;
that the per-user equipment measurement gap and/or the per-frequency range measurement gap is to be released; and
that the first measurement gap is to be configured for the user equipment.

Further, the processing module is further configured to receive a sixth notification message from the first network node, where the sixth notification message includes at least one of the following information:
that the first measurement gap is to be configured for the user equipment;
configuration information of the first measurement gap;
that a per-user equipment measurement gap and/or a per-frequency range measurement gap is to be released; and
that the measurement gap configured by the second network node is to be released.

Optionally, the processing module is further configured to release the per-user equipment measurement gap and/or the per-frequency range measurement gap for the user equipment.

Optionally, the processing module is further configured to send a seventh notification message to the first network node, where the seventh notification message includes at least one of the following information:
an acknowledgment message of the sixth notification message received;
that the first network node is to configure the first measurement gap for the user equipment;
the configuration information of the first measurement gap;
that the measurement gap configured by the first network node is to be released;
that the per-user equipment measurement gap and/or the per-frequency range measurement gap is to be released; and
that the first measurement gap is to be configured for the user equipment.

Further, the configuration information includes a pattern, a repetition period, and a length of the measurement gap.

Further, in this embodiment, the second network node is a master base station, and the first network node is a secondary base station; or the second network node is a secondary base station, and the first network node is a master base station.

An embodiment of this disclosure further provides a network node, including a memory, a processor, and a computer program stored in the memory and capable of running on the processor, and when the computer program is executed by the processor, the steps of the foregoing method for configuring a measurement gap are implemented.

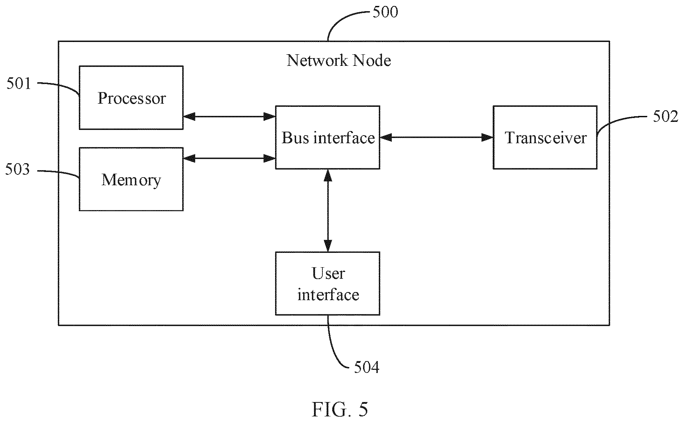

FIG. 5 is a structural diagram of a network node to which the embodiments of this disclosure are applied. The network node can implement details of the method for configuring a measurement gap in the foregoing embodiments and achieve the same effects. As shown in FIG. 5, the network node 500 includes a processor 501, a transceiver 502, a memory 503, a user interface 504, and a bus interface.

In an embodiment of this disclosure, the network node 500 further includes a computer program stored in the memory 503 and capable of running on the processor 501. When the computer program is executed by the processor 501, the following steps are implemented: configuring a first measurement gap for user equipment; and determining, with a first network node, a measurement gap for the user equipment, where the measurement gap for the user equipment is selected from the first measurement gap and a second measurement gap, and the second measurement gap is a measurement gap configured by the first network node for the user equipment.

In FIG. 5, a bus architecture may include any quantity of interconnected buses and bridges, and specifically connect together various circuits of one or more processors represented by the processor 501 and a memory represented by the memory 503. The bus architecture may further interconnect various other circuits such as a peripheral device, a voltage regulator, and a power management circuit. These are all well known in the art, and therefore are not further described in this specification. The bus interface provides interfaces. The transceiver 502 may be a plurality of elements, including a transmitter and a receiver, and provides units configured to perform communication with various other apparatuses over a transmission medium. For different user equipment, the user interface 504 may also be an interface capable of externally or internally connecting a required device, and the connected device includes but is not limited to a keypad, a display, a speaker, a microphone, a joystick, and the like.

The processor 501 is responsible for management of the bus architecture and general processing, and the memory 503 may store data used by the processor 501 when the processor 501 performs an operation.

Further, the measurement gap includes at least one of the following: a per-user equipment measurement gap and a per-frequency range measurement gap.

Further, when the computer program is executed by the processor 501, the following step is implemented: sending a first notification message to the first network node, where the first notification message includes at least one of the following information:
that the first measurement gap is to be configured for the user equipment;
configuration information of the first measurement gap;
notification to the first network node to release a per-user equipment measurement gap and/or a per-frequency range measurement gap; and
notification to the first network node to release the configured measurement gap.

Optionally, when the computer program is executed by the processor 501, the following step is implemented: releasing the second measurement gap.

Optionally, when the computer program is executed by the processor 501, the following step is implemented: receiving a second notification message from the first network node, where the second notification message includes at least one of the following information:
an acknowledgment message of the first notification message received;
that the second network node is to configure the first measurement gap for the user equipment;
the configuration information of the first measurement gap;
that the per-user equipment measurement gap and/or the per-frequency range measurement gap is to be released; and
that the measurement gap configured by the first network node is to be released.

Optionally, when the computer program is executed by the processor 501, the following step is implemented: sending configuration information of the first measurement gap to the user equipment.

Specifically, the configuration information may be sent to the user equipment through an SRB3.

Optionally, when the computer program is executed by the processor 501, the following step is implemented: receiving a third notification message from the first network node, where the third notification message includes at least one of the following information:
an acknowledgment message of the first notification message received;
that the second network node is to release the second measurement gap configured by the first network node;
the second measurement gap configured by the first network node for the user equipment;
whether the first network node has configured the second measurement gap for the user equipment; and
that the per-user equipment measurement gap and/or the per-frequency range measurement gap is to be released.

Further, when the third notification message includes information that the second measurement gap is to be released, or information that the per-user equipment measurement gap and/or the per-frequency range measurement gap is to be released, the third notification message is an RRC message contained in a transparent container.

Optionally, when the computer program is executed by the processor 501, the following step is implemented: releasing the measurement gap for the user equipment.

Specifically, the measurement gap released is the second measurement gap.

Further, when the computer program is executed by the processor 501, the following step is implemented: sending a measurement gap release message to the user equipment; or sending a measurement gap release message contained in a transparent container to the user equipment.

Optionally, when the computer program is executed by the processor 501, the following step is implemented: sending a fourth notification message to the first network node, where the fourth notification message includes at least one of the following information:
an acknowledgment message of the third notification message received;
that the second network node is to configure the first measurement gap for the user equipment;
the configuration information of the first measurement gap;
that the measurement gap configured by the first network node is to be released; and
that the per-user equipment measurement gap and/or the per-frequency range measurement gap is to be released.

Optionally, when the computer program is executed by the processor 501, the following step is implemented: sending the configuration information of the first measurement gap to the user equipment.

Further, the configuration information and the measurement gap release message are located in a same radio resource control RRC message; or
the configuration information is sent to the user equipment through an SRB 1 message.

Optionally, when the computer program is executed by the processor 501, the following step is implemented: releasing, by the first network node, the per-user equipment measurement gap and/or the per-frequency range measurement gap.

Optionally, when the computer program is executed by the processor 501, the following step is implemented: receiving a fifth notification message from the first network node, where the fifth notification message includes at least one of the following information:
an acknowledgment message of the first notification message received;
that the second network node is to configure the first measurement gap for the user equipment;
the configuration information of the first measurement gap;
that the measurement gap configured by the first network node is to be released;
that the per-user equipment measurement gap and/or the per-frequency range measurement gap is to be released; and
that the first measurement gap is to be configured for the user equipment.

Further, when the computer program is executed by the processor 501, the following step is implemented: receiving a sixth notification message from the first network node, where the sixth notification message includes at least one of the following information:
that the first measurement gap is to be configured for the user equipment;
configuration information of the first measurement gap;
that a per-user equipment measurement gap and/or a per-frequency range measurement gap is to be released; and
that the measurement gap configured by the second network node is to be released.

Optionally, when the computer program is executed by the processor 501, the following step is implemented: releasing the per-user equipment measurement gap and/or the per-frequency range measurement gap for the user equipment.

Optionally, when the computer program is executed by the processor 501, the following step is implemented: sending a seventh notification message to the first network node, where the seventh notification message includes at least one of the following information:
an acknowledgment message of the sixth notification message received;
that the first network node is to configure the first measurement gap for the user equipment;
the configuration information of the first measurement gap;
that the measurement gap configured by the first network node is to be released;
that the per-user equipment measurement gap and/or the per-frequency range measurement gap is to be released; and
that the first measurement gap is to be configured for the user equipment.

Further, the configuration information includes a pattern, a repetition period, and a length of the measurement gap.

In this embodiment, the network node may be a master base station, or may be a secondary base station.

An embodiment of this disclosure further provides a computer-readable storage medium, where the computer-readable storage medium stores a computer program, and when the program is executed by a processor, the steps of the foregoing method for configuring a measurement gap are implemented.

For example, the computer-readable storage medium includes a volatile readable storage medium and a non-volatile readable storage medium, such as a read-only memory (Read-Only Memory, ROM), a random access memory (Random Access Memory, RAM), a magnetic disk, or an optical disk.

It can be understood that the embodiments described in this specification may be implemented by hardware, software, firmware, middleware, microcode, or a combination thereof. For hardware implementation, a processing unit may be implemented in one or more application-specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this application, or a combination thereof.

For software implementation, the technology described herein may be implemented by executing modules (for example, procedures and functions) of the functions described herein. Software code may be stored in the memory and executed by the processor. The memory may be implemented inside the processor or outside the processor.

All embodiments in this specification are described in a progressive manner. Each embodiment focuses on differences from other embodiments. For the part that is the same or similar between different embodiments, reference may be made between the embodiments.

Persons skilled in the art should understand that the embodiments of this disclosure may be provided as a method, an apparatus, or a computer program product. Therefore, the embodiments of this disclosure may be hardware-only embodiments, software-only embodiments, or embodiments with a combination of software and hardware. Moreover, the embodiments of this disclosure may use a form of a computer program product that is implemented on one or more computer-usable storage media (including but not limited to a disk memory, a CD-ROM (compact disc read-only memory), an optical memory, and the like) that include computer-usable program codes.

The embodiments of this disclosure are described with reference to the flowcharts and/or block diagrams of the method, the user equipment (system), and the computer program product according to the embodiments of this disclosure. It should be understood that computer program instructions may be used to implement each process and/or each block in the flowcharts and/or the block diagrams, or a combination of a process and/or a block in the flowcharts and/or the block diagrams. These computer program instructions may be provided to a general-purpose computer, a special-purpose computer, an embedded processor, or a processor of any other programmable data processing user equipment to generate a machine, so that the instructions executed by a computer or a processor of any other programmable data processing user equipment generate an apparatus for implementing a specific function in one or more processes in the flowcharts and/or in one or more blocks in the block diagrams.

These computer program instructions may also be stored in a computer-readable memory that can direct the computer or any other programmable data processing user equipment to work in a specific manner, so that the instructions stored in the computer-readable memory produce an artifact that includes an instruction apparatus. The instruction apparatus implements a specific function in one or more processes in the flowcharts and/or in one or more blocks in the block diagrams.

These computer program instructions may be loaded onto a computer or other programmable data processing user equipment, so that a series of operations and steps are performed on the computer or the other programmable user equipment, thereby generating computer-implemented processing. Therefore, the instructions executed on the computer or the other programmable user equipment provide steps for implementing the functions specified in one or more processes in the flowcharts and/or in one or more blocks in the block diagrams.

Although some optional embodiments in the embodiments of this disclosure have been described, persons skilled in the art can make changes and modifications to these embodiments once they learn the basic inventive concept.

It should be further noted that in this specification, relational terms such as "first" and "second" are only used to distinguish one entity or operation from another, and do not necessarily require or imply that any actual relationship or sequence exists between these entities or operations. Moreover, the terms "include", "comprise", or any of their variants are intended to cover a non-exclusive inclusion, such that a process, a method, an article, or user equipment that includes a list of elements not only includes those elements but also includes other elements that are not expressly listed, or further includes elements inherent to such a process, method, article, or user equipment. In absence of more constraints, an element preceded by "includes a..." does not preclude the existence of other identical elements in the process, method, article, or user equipment that includes the element.

## Claims

1. A method for configuring a measurement gap, operable by a second network node, the method comprises:
configuring a first measurement gap for user equipment (101); and
determining, with a first network node, a measurement gap for the user equipment, wherein the measurement gap for the user equipment is selected from the first measurement gap and a second measurement gap, and the second measurement gap is a measurement gap configured by the first network node for the user equipment (102),
wherein the second measurement gap comprises at least one of the following: a per-user equipment measurement gap of the user equipment and a per-frequency range measurement gap of the user equipment; wherein the second network node is a master base station, and the first network node is a secondary base station; or the second network node is a secondary base station, and the first network node is a master base station;
**characterized in that** the determining, with the first network node, a measurement gap for the user equipment comprises:
sending a first notification message to the first network node, wherein the first notification message comprises following information:
notification to the first network node to release the second measurement gap.

2. The method for configuring a measurement gap according to claim 1, wherein the first notification message further comprises at least one of the following information:
that the first measurement gap is to be configured for the user equipment;
configuration information of the first measurement gap; and
notification to the first network node to release the measurement gap configured by the first network node.

3. The method for configuring a measurement gap according to claim 1, further comprising:
releasing, by the first network node, the second measurement gap.

4. The method for configuring a measurement gap according to claim 1 or 2, further comprising:
receiving a second notification message from the first network node, wherein the second notification message comprises at least one of the following information:
an acknowledgment message of the first notification message received;
that the second network node is to configure the first measurement gap for the user equipment;
the configuration information of the first measurement gap;
that the per-user equipment measurement gap and/or the per-frequency range measurement gap is to be released; and
that the measurement gap configured by the first network node is to be released.

5. The method for configuring a measurement gap according to claim 1, further comprising:
sending configuration information of the first measurement gap to the user equipment.

6. The method for configuring a measurement gap according to claim 5, wherein the configuration information is sent to the user equipment through a signaling radio bearer SRB3.

7. The method for configuring a measurement gap according to claim 1 or 2, further comprising:
receiving a third notification message from the first network node, wherein the third notification message comprises at least one of the following information:
an acknowledgment message of the first notification message received;
that the second network node is to release the second measurement gap configured by the first network node;
the second measurement gap configured by the first network node for the user equipment;
whether the first network node has configured the second measurement gap for the user equipment;
that the per-user equipment measurement gap and/or the per-frequency range measurement gap is to be released.

8. The method for configuring a measurement gap according to claim 7, wherein when the third notification message comprises information that the second measurement gap is to be released, or information that the per-user equipment measurement gap and/or the per-frequency range measurement gap is to be released, the third notification message is an RRC message contained in a transparent container.

9. The method for configuring a measurement gap according to claim 1, further comprising:
releasing the measurement gap for the user equipment.

10. The method for configuring a measurement gap according to claim 9, wherein the measurement gap released by the second network node is the second measurement gap.

11. The method for configuring a measurement gap according to claim 9, wherein the releasing the measurement gap for the user equipment comprises:
sending, by the second network node, a measurement gap release message to the user equipment; or
sending, by the first network node through the second network node, a measurement gap release message contained in a transparent container to the user equipment.

12. The method for configuring a measurement gap according to claim 7, wherein the method further comprises:
sending a fourth notification message to the first network node, wherein the fourth notification message comprises at least one of the following information:
an acknowledgment message of the third notification message received;
that the second network node is to configure the first measurement gap for the user equipment;
the configuration information of the first measurement gap;
that the measurement gap configured by the first network node is to be released; and
that the per-user equipment measurement gap and/or the per-frequency range measurement gap is to be released.

13. The method for configuring a measurement gap according to any one of claims 1 to 12, wherein the configuration information comprises a pattern, a repetition period, and a length of the measurement gap.

14. A second network node, comprising:
a configuration module (21), configured to configure a first measurement gap for user equipment; and
a processing module (22), configured to determine, with a first network node, a measurement gap for the user equipment, wherein the measurement gap for the user equipment is selected from the first measurement gap and a second measurement gap, and the second measurement gap is a measurement gap configured by the first network node for the user equipment,
wherein the second measurement gap comprises at least one of the following: a per-user equipment measurement gap of the user equipment and a per-frequency range measurement gap of the user equipment; wherein the second network node is a master base station, and the first network node is a secondary base station; or the second network node is a secondary base station, and the first network node is a master base station;
**characterized in that** the processing module is further configured to send a first notification message to the first network node, wherein the first notification message comprises following information:
notification to the first network node to release the second measurement gap.

## Patentansprüche

1. Verfahren zum Konfigurieren einer Messlücke, ausführbar durch einen zweiten Netzknoten, wobei das Verfahren umfasst:
Konfigurieren einer ersten Messlücke für eine Benutzereinrichtung (101); und
Bestimmen, mit einem ersten Netzknoten, einer Messlücke für die Benutzereinrichtung, wobei die Messlücke für die Benutzereinrichtung aus der ersten Messlücke und einer zweiten Messlücke ausgewählt wird, und die zweite Messlücke eine durch den ersten Netzknoten für die Benutzereinrichtung (102) konfigurierte Messlücke ist,
wobei die zweite Messlücke mindestens eines der Folgenden umfasst: eine benutzereinrichtungsbezogene Messlücke der Benutzereinrichtung und eine frequenzbereichsbezogene Messlücke der Benutzereinrichtung; wobei der zweite Netzknoten eine Master-Basisstation ist und der erste Netzknoten eine sekundäre Basisstation ist; oder der zweite Netzknoten eine sekundäre Basisstation ist und der erste Netzknoten eine Master-Basisstation ist;
**dadurch gekennzeichnet, dass** das Bestimmen, mit dem ersten Netzknoten, einer Messlücke für die Benutzereinrichtung umfasst:
Senden einer ersten Benachrichtigungsnachricht an den ersten Netzknoten, wobei die erste Benachrichtigungsnachricht die folgenden Informationen umfasst:
Benachrichtigung des ersten Netzknotens, die zweite Messlücke freizugeben.

2. Verfahren zum Konfigurieren einer Messlücke nach Anspruch 1, wobei die erste Benachrichtigungsnachricht ferner mindestens eine der folgenden Informationen umfasst:
dass die erste Messlücke für die Benutzereinrichtung zu konfigurieren ist;
Konfigurationsinformationen der ersten Messlücke; und
Benachrichtigung des ersten Netzknotens, die durch den ersten Netzknoten konfigurierte Messlücke freizugeben.

3. Verfahren zum Konfigurieren einer Messlücke nach Anspruch 1, ferner umfassend:
Freigeben, durch den ersten Netzknoten, der zweiten Messlücke.

4. Verfahren zum Konfigurieren einer Messlücke nach Anspruch 1 oder 2, ferner umfassend:
Empfangen einer zweiten Benachrichtigungsnachricht von dem ersten Netzknoten, wobei die zweite Benachrichtigungsnachricht mindestens eine der folgenden Informationen umfasst:
eine Bestätigungsnachricht der empfangenen ersten Benachrichtigungsnachricht;
dass der zweite Netzknoten die erste Messlücke für die Benutzereinrichtung zu konfigurieren hat;
die Konfigurationsinformationen der ersten Messlücke;
dass die Messlücke pro Benutzergerät und/oder die Messlücke pro Frequenzbereich freizugeben ist; und
dass die durch den ersten Netzknoten konfigurierte Messlücke freizugeben ist.

5. Verfahren zum Konfigurieren einer Messlücke nach Anspruch 1, ferner umfassend:
Senden von Konfigurationsinformationen der ersten Messlücke an das Benutzergerät.

6. Verfahren zum Konfigurieren einer Messlücke nach Anspruch 5, wobei die Konfigurationsinformationen über einen Signalisierungs-Funkträger SRB3 an das Benutzergerät gesendet werden.

7. Verfahren zum Konfigurieren einer Messlücke nach Anspruch 1 oder 2, ferner umfassend:
Empfangen einer dritten Benachrichtigungsnachricht von dem ersten Netzknoten, wobei die dritte Benachrichtigungsnachricht mindestens eine der folgenden Informationen umfasst:
eine Bestätigungsnachricht der empfangenen ersten Benachrichtigungsnachricht;
dass der zweite Netzknoten, die durch den ersten Netzknoten konfigurierte zweite Messlücke freigeben soll;
die durch den ersten Netzknoten für das Benutzergerät konfigurierte zweite Messlücke; ob der erste Netzknoten die zweite Messlücke für das Benutzergerät konfiguriert hat;
dass die Messlücke pro Benutzergerät und/oder die Messlücke pro Frequenzbereich freizugeben ist.

8. Verfahren zum Konfigurieren einer Messlücke nach Anspruch 7, wobei, wenn die dritte Benachrichtigungsnachricht Informationen umfasst, dass die zweite Messlücke freizugeben ist, oder Informationen, dass die Messlücke pro Benutzergerät und/oder die Messlücke pro Frequenzbereich freizugeben ist, die dritte Benachrichtigungsnachricht eine in einem transparenten Container enthaltene RRC-Nachricht ist.

9. Verfahren zum Konfigurieren einer Messlücke nach Anspruch 1, ferner umfassend:
Freigeben der Messlücke für das Benutzergerät.

10. Verfahren zum Konfigurieren einer Messlücke nach Anspruch 9, wobei die durch den zweiten Netzknoten freigegebene Messlücke die zweite Messlücke ist.

11. Verfahren zum Konfigurieren einer Messlücke nach Anspruch 9, wobei das Freigeben der Messlücke für das Benutzergerät umfasst:
Senden, durch den zweiten Netzknoten, einer Messlückenfreigabenachricht an das Benutzergerät;
oder
Senden, durch den ersten Netzknoten über den zweiten Netzknoten, einer in einem transparenten Container enthaltenen Messlückenfreigabenachricht an das Benutzergerät.

12. Verfahren zum Konfigurieren einer Messlücke nach Anspruch 7, wobei das Verfahren ferner umfasst:
Senden einer vierten Benachrichtigungsnachricht an den ersten Netzknoten, wobei die vierte Benachrichtigungsnachricht mindestens eine der folgenden Informationen umfasst:
eine Bestätigungsnachricht der empfangenen dritten Benachrichtigungsnachricht;
dass der zweite Netzknoten die erste Messlücke für das Benutzergerät konfigurieren soll;
die Konfigurationsinformationen der ersten Messlücke;
dass die durch den ersten Netzknoten konfigurierte Messlücke freigegeben werden soll; und
dass die Messlücke pro Benutzergerät und/oder die Messlücke pro Frequenzbereich freigegeben werden soll.

13. Verfahren zum Konfigurieren einer Messlücke nach einem der Ansprüche 1 bis 12, wobei die Konfigurationsinformationen ein Muster, eine Wiederholungsperiode und eine Länge der Messlücke umfassen.

14. Zweiter Netzknoten, umfassend:
ein Konfigurationsmodul (21), das dazu konfiguriert ist, eine erste Messlücke für ein Benutzergerät zu konfigurieren;
und
ein Verarbeitungsmodul (22), das dazu konfiguriert ist, gemeinsam mit einem ersten Netzknoten eine Messlücke für das Benutzergerät zu bestimmen, wobei die Messlücke für das Benutzergerät aus der ersten Messlücke und einer zweiten Messlücke ausgewählt wird und die zweite Messlücke eine durch den ersten Netzknoten für das Benutzergerät konfigurierte Messlücke ist,
wobei die zweite Messlücke mindestens eines der Folgenden umfasst: eine Messlücke pro Benutzergerät des Benutzergeräts und eine Messlücke pro Frequenzbereich des Benutzergeräts; wobei der zweite Netzknoten eine Master-Basisstation ist und der erste Netzknoten eine sekundäre Basisstation ist; oder der zweite Netzknoten eine sekundäre Basisstation ist und der erste Netzknoten eine Master-Basisstation ist;
**dadurch gekennzeichnet, dass** das Verarbeitungsmodul ferner dazu konfiguriert ist, eine erste Benachrichtigungsnachricht an den ersten Netzknoten zu senden, wobei die erste Benachrichtigungsnachricht folgende Information umfasst:
Benachrichtigung des erstens Netzknoten, die zweite Messlücke freizugeben.

## Revendications

1. Procédé de configuration d'un intervalle de mesure, pouvant être mis en œuvre par un deuxième nœud de réseau, le procédé comprenant :
la configuration d'un premier intervalle de mesure pour un équipement utilisateur (101) ; et
la détermination, avec un premier nœud de réseau, d'un intervalle de mesure pour l'équipement utilisateur, dans lequel l'intervalle de mesure pour l'équipement utilisateur est sélectionné parmi le premier intervalle de mesure et un deuxième intervalle de mesure, et le deuxième intervalle de mesure est un intervalle de mesure configuré par le premier nœud de réseau pour l'équipement utilisateur (102),
dans lequel le deuxième intervalle de mesure comprend au moins l'un des éléments suivants : un intervalle de mesure par équipement utilisateur de l'équipement utilisateur et un intervalle de mesure par plage de fréquences de l'équipement utilisateur ; dans lequel le deuxième nœud de réseau est une station de base maître, et le premier nœud de réseau est une station de base secondaire ; ou le deuxième nœud de réseau est une station de base secondaire, et le premier nœud de réseau est une station de base maître ;
**caractérisé en ce que** la détermination, avec le premier nœud de réseau, d'un intervalle de mesure pour l'équipement utilisateur comprend :
l'envoi d'un premier message de notification au premier nœud de réseau, dans lequel le premier message de notification comprend les informations suivantes :
une notification au premier nœud de réseau pour libérer le deuxième intervalle de mesure.

2. Procédé de configuration d'un intervalle de mesure selon la revendication 1, dans lequel le premier
message de notification comprend en outre au moins l'une des informations suivantes :
que le premier intervalle de mesure doit être configuré pour l'équipement utilisateur ;
des informations de configuration du premier intervalle de mesure ; et
une notification au premier nœud de réseau pour libérer l'intervalle de mesure configuré par le premier nœud de réseau.

3. Procédé de configuration d'un intervalle de mesure selon la revendication 1, comprenant en outre :
la libération, par le premier nœud de réseau, du deuxième intervalle de mesure.

4. Procédé de configuration d'un intervalle de mesure selon la revendication 1 ou 2, comprenant en outre :
la réception d'un deuxième message de notification provenant du premier nœud de réseau, dans lequel le deuxième message de notification comprend au moins l'une des informations suivantes :
un message d'accusé de réception du premier message de notification reçu ;
que le deuxième nœud de réseau doit configurer le premier intervalle de mesure pour l'équipement utilisateur ;
les informations de configuration du premier intervalle de mesure ;
que l'intervalle de mesure par équipement utilisateur et/ou l'intervalle de mesure par plage de fréquences doit être libéré ; et
que l'intervalle de mesure configuré par le premier nœud de réseau doit être libéré.

5. Procédé de configuration d'un intervalle de mesure selon la revendication 1, comprenant en outre :
l'envoi d'informations de configuration du premier intervalle de mesure à l'équipement utilisateur.

6. Procédé de configuration d'un intervalle de mesure selon la revendication 5, dans lequel les informations de configuration sont envoyées à l'équipement utilisateur par l'intermédiaire d'une porteuse radio de signalisation SRB3.

7. Procédé de configuration d'un intervalle de mesure selon la revendication 1 ou 2, comprenant en outre :
la réception d'un troisième message de notification provenant du premier nœud de réseau, dans lequel le troisième message de notification comprend au moins l'une des informations suivantes :
un message d'accusé de réception du premier message de notification reçu ;
que le deuxième nœud de réseau doit libérer le deuxième intervalle de mesure configuré par le premier nœud de réseau ;
le deuxième intervalle de mesure configuré par le premier nœud de réseau pour l'équipement utilisateur ;
si le premier nœud de réseau a configuré le deuxième intervalle de mesure pour l'équipement utilisateur ;
que l'intervalle de mesure par équipement utilisateur et/ou l'intervalle de mesure par plage de fréquences doit être libéré.

8. Procédé de configuration d'un intervalle de mesure selon la revendication 7, dans lequel, lorsque le troisième message de notification comprend des informations selon lesquelles le deuxième intervalle de mesure doit être libéré, ou des informations selon lesquelles l'intervalle de mesure par équipement utilisateur et/ou l'intervalle de mesure par plage de fréquences doit être libéré, le troisième message de notification est un message RRC contenu dans un conteneur transparent.

9. Procédé de configuration d'un intervalle de mesure selon la revendication 1, comprenant en outre :
la libération de l'intervalle de mesure pour l'équipement utilisateur.

10. Procédé de configuration d'un intervalle de mesure selon la revendication 9, dans lequel l'intervalle de mesure libéré par le deuxième nœud de réseau est le deuxième intervalle de mesure.

11. Procédé de configuration d'un intervalle de mesure selon la revendication 9, dans lequel la libération de l'intervalle de mesure pour l'équipement utilisateur comprend :
l'envoi, par le deuxième nœud de réseau, d'un message de libération d'intervalle de mesure à l'équipement utilisateur ; ou
l'envoi, par le premier nœud de réseau par l'intermédiaire du deuxième nœud de réseau, d'un message de libération d'intervalle de mesure contenu dans un conteneur transparent à l'équipement utilisateur.

12. Procédé de configuration d'un intervalle de mesure selon la revendication 7, dans lequel le procédé comprend en outre :
l'envoi d'un quatrième message de notification au premier nœud de réseau, dans lequel le quatrième message de notification comprend au moins l'une des informations suivantes :
un message d'accusé de réception du troisième message de notification reçu ;
que le deuxième nœud de réseau doit configurer le premier intervalle de mesure pour l'équipement utilisateur ;
les informations de configuration du premier intervalle de mesure ;
que l'intervalle de mesure configuré par le premier nœud de réseau doit être libéré ; et
que l'intervalle de mesure par équipement utilisateur et/ou l'intervalle de mesure par plage de fréquences doit être libéré.

13. Procédé de configuration d'un intervalle de mesure selon l'une quelconque des revendications 1 à 12, dans lequel les informations de configuration comprennent un motif, une période de répétition et une longueur de l'intervalle de mesure.

14. Deuxième nœud de réseau, comprenant :
un module de configuration (21), configuré pour configurer un premier intervalle de mesure pour un équipement utilisateur ;
et
un module de traitement (22), configuré pour déterminer, avec un premier nœud de réseau, un intervalle de mesure pour l'équipement utilisateur, dans lequel l'intervalle de mesure pour l'équipement utilisateur est sélectionné parmi le premier intervalle de mesure et un deuxième intervalle de mesure, et le deuxième intervalle de mesure est un intervalle de mesure configuré par le premier nœud de réseau pour l'équipement utilisateur,
dans lequel le deuxième intervalle de mesure comprend au moins l'un des éléments suivants : un intervalle de mesure par équipement utilisateur de l'équipement utilisateur et un intervalle de mesure par plage de fréquences de l'équipement utilisateur ; dans lequel le deuxième nœud de réseau est une station de base maître, et le premier nœud de réseau est une station de base secondaire ; ou le deuxième nœud de réseau est une station de base secondaire, et le premier nœud de réseau est une station de base maître ;
**caractérisé en ce que** le module de traitement est en outre configuré pour envoyer un premier message de notification au premier nœud de réseau, dans lequel le premier message de notification comprend les informations suivantes :
une notification au premier nœud de réseau de libérer le deuxième intervalle de mesure.
